# EUROPEAN PATENT APPLICATION

(11) **EP 4 773 268 A1**
(43) Date of publication of application: **08.07.2026**
(21) Application number: 24869608.0
(22) Date of filing: 07.03.2024
(51) Int. Cl.: H01M 10/04, H01M 50/147, H01M 50/553

(54) **BATTERY CELL, COVER PLATE ASSEMBLY, BATTERY, AND ELECTRICAL DEVICE**

(30) Priority: 27.09.2023 CN 202311264394
(71) Applicant: Contemporary Amperex Technology Co., Limited, Ningde, Fujian 352100 (CN)
(72) Inventor: CHEN, Wei, Ningde, Fujian 352100 (CN); NIE, Xianzhen, Ningde, Fujian 352100 (CN)
(74) Representative: Gong, Jinping
(86) International application number: PCT/CN2024/080481
(87) International publication number: WO 2025/066037

(57) **Abstract**

Embodiments of the present disclosure provide a battery cell, a cover plate assembly, a battery, and an electrical device. The battery cell includes a housing and an electrode assembly; the housing is provided with a mounting cavity, and the electrode assembly is arranged in the mounting cavity; an avoidance area is arranged on a first wall of the housing; the side of the avoidance area facing the electrode assembly is recessed to form an avoidance slot, and the side of the avoidance area away from the electrode assembly protrudes out to form a protrusion; and a part of the electrode assembly extends into the avoidance slot.

## Description

### CROSS-REFERENCE TO RELATED APPLICATIONS

The present disclosure is based on the Chinese Patent Application No. 202311264394.7, filed on September 27, 2023 and entitled "BATTERY CELL, COVER PLATE ASSEMBLY, BATTERY, AND ELECTRICAL DEVICE" and claims priority to the Chinese Patent Application. The entire content of the Chinese Patent Application is incorporated in the present disclosure by reference.

### TECHNICAL FIELD

The present disclosure relates to the field of battery technologies, and specifically, to a battery cell, a cover plate assembly, a battery, and an electrical device.

### BACKGROUND

In recent years, batteries, as an important component of the new energy industry, have attracted increasing attention. For example, new energy automobiles carrying batteries have been widely used. In addition, the batteries are further applied to the energy storage field more frequently.

A plurality of battery cells are disposed in a battery, and the plurality of battery cells are electrically connected in series or in parallel to implement charging and discharging.

When a mounting space of a battery is specified, a quantity of battery cells loaded in the battery is closely related to a capacity of the battery.

### SUMMARY

In view of this, embodiments of the present disclosure expect to provide a battery cell, a cover plate assembly, a battery, and an electrical device, which aim to improve space utilization in the battery and energy density of the battery.

To achieve the foregoing objective, technical solutions in the embodiments of the present disclosure are implemented as follows:
An embodiment of the present disclosure provides a battery cell, where the battery cell includes:
a housing, provided with a mounting cavity; and
an electrode assembly, arranged in the mounting cavity; where
an avoidance area is provided on a first wall of the housing, a side of the avoidance area facing the electrode assembly is recessed to form an avoidance slot, and a side of the avoidance area facing away from the electrode assembly protrudes out to form a protrusion, and a part of the electrode assembly extends into the avoidance slot.

In the battery cell in this embodiment of the present disclosure, the avoidance slot for accommodating a part of the electrode assembly and the protrusion corresponding to the accommodating groove are formed on the housing, so that when a volume of the mounting cavity satisfies a requirement for accommodating the electrode assembly, it is beneficial to reducing a redundant volume in the mounting cavity, and making a space in the battery cell more compact, to reduce a total volume and an outer contour size of the battery cell, and it is further beneficial to improving a quantity of battery cells that can be accommodated in the battery, and improving energy density and space utilization of the battery.

In some embodiments, the electrode assembly includes a tab and an electrode plate, the tab is located at an edge of one end of the electrode plate facing an inner wall of the mounting cavity, and the tab extends into the avoidance slot. This helps make a space shape inside the mounting cavity adaptive to an outer contour shape of the electrode plate. This is beneficial to reducing a space volume of the mounting cavity, to reduce an overall size of the battery cell, and is beneficial to avoiding pressing between an inner wall of the avoidance slot and the electrode plate, so that the battery cell can be normally charged and discharged.

In some embodiments, there are two tabs, and polarities of the tabs are opposite, there are two avoidance areas, and each of the two tabs is located in the avoidance slot of one of the avoidance areas. In this way, a probability of causing a short circuit due to contact between two tabs is reduced, thereby effectively improving use safety of the battery cell.

Alternatively, there is one avoidance area, and the two tabs are located in the avoidance slot of the avoidance area and are spaced apart. In this way, only a protrusion and an avoidance slot corresponding to one avoidance area need to be manufactured on the cover plate assembly, thereby reducing production costs. In addition, it is convenient for the two tabs to synchronously enter the avoidance slot in a process in which the cover plate assembly covers the opening, thereby simplifying mounting steps.

In some embodiments, there are two avoidance areas, and each of the two avoidance areas is located at one end of the battery cell along a length direction of the battery cell. In this way, a spacing between the two avoidance areas is enlarged as much as possible, which helps an outer surface of the cover plate assembly between the two avoidance areas form a large flat region, so that when a volume inside the battery is specified, it is convenient for other components having large outer contour sizes in the battery to be arranged in the region, thereby providing convenience for arranging the other components in the battery. Moreover, it is beneficial to reducing a volume of the battery, thereby improving the space utilization inside the battery, so that the volume of the battery is more compact.

In some embodiments, there is one avoidance area, and a distance between the avoidance area and one end of the battery cell in the length direction is greater than a distance between the avoidance area and the other end of the battery cell in the length direction. In this way, when the volume inside the battery is specified, it is convenient for other components having large outer contour sizes in the battery to be arranged in a region having a large area, which provides convenience for arranging the other components in the battery. In addition, it is beneficial to reducing the volume of the battery, and improving the space utilization inside the battery, so that the volume of the battery is more compact.

In some embodiments, the avoidance area is located at one end of the battery cell along the length direction of the battery cell. In this way, an area of a region that is of the outer surface of the housing and that is located at the other end of the battery cell in the length direction is the largest, so that it is convenient for other components having large outer contour sizes in the battery to be arranged in the region, thereby providing convenience for arranging the other components in the battery. Moreover, it is beneficial to reducing the volume of the battery, thereby improving the space utilization of the battery, so that the volume of the battery is more compact.

In some embodiments, the housing includes an encirclement and a cover plate assembly, a side of the encirclement is open to form an opening, the cover plate assembly includes a cover plate body and an anti-explosion valve, the cover plate body covers the opening to jointly enclose the mounting cavity, the first wall is located at the cover plate body, and the anti-explosion valve is arranged at the cover plate body.

In this way, by arranging the avoidance area on the cover plate assembly 13, it is beneficial to enabling a part of the electrode assembly to directly enter or exit from the avoidance slot in a process of assembling and disassembling the cover plate assembly, thereby improving an assembly and disassembly efficiency of the battery cell. In addition, it is beneficial to synchronously mounting the anti-explosion valve with the assembly of the cover plate assembly, thereby improving the assembly efficiency of the battery cell.

In some embodiments, the anti-explosion valve is arranged on the protrusion, and the protrusion is located at one end of the cover plate body along the length direction of the battery cell.

In this way, it is beneficial to improving space utilization of a space in the avoidance slot, reducing the redundant volume in the mounting cavity, and making the space in the battery cell more compact, to reduce the total volume and the outer contour size of the battery cell, and it is further beneficial to improving the quantity of battery cells that can be accommodated in the battery, and improving the energy density and the space utilization of the battery. In addition, an area of a region that is of an outer surface of the cover plate body and that is located at the other end of the battery cell in the length direction is larger, so that it is convenient for other components having large outer contour sizes in the battery to be arranged in the region, thereby providing convenience for arranging the other components in the battery.

In some embodiments, the anti-explosion valve is located on the cover plate body, and the anti-explosion valve and the protrusion are respectively located at one end of the cover plate body along the length direction of the battery cell. In this way, it is beneficial to reducing a volume of the protrusion.

In some embodiments, the electrode assembly includes a tab and an electrode plate, the tab is arranged at an edge of one end of the electrode plate facing the cover plate body, and the tab is located at one end of the electrode plate along the length direction of the battery cell, so that the tab extends into the avoidance slot.

In this way, arrangement of the tab adapts to arrangement of the protrusion, thereby facilitating improving space utilization inside the mounting cavity.

In some embodiments, the cover plate assembly includes a terminal, and the terminal is arranged on the protrusion and is electrically connected to the electrode assembly. In this way, the space utilization inside the avoidance slot is further improved, thereby reducing the redundant volume in the mounting cavity, and making the space in the battery cell more compact, to reduce the total volume and the outer contour size of the battery cell, and it is further beneficial to improving the quantity of battery cells that can be accommodated in the battery, and improving the energy density and the space utilization of the battery.

In some embodiments, a first central plane of the battery cell along a length direction of the battery cell coincides with a third central plane of the protrusion along the length direction of the battery cell.

In this way, it is beneficial to making a structure of the battery cell symmetrical about the first central plane, and facilitates adjusting placement directions when arranging a plurality of battery cells in the battery module, to improve mounting fitness of the battery cell.

In some embodiments, a spacing between the first central plane of the battery cell along the length direction of the battery cell and the third central plane of the protrusion along the length direction of the battery cell is a first spacing, and a ratio of the first spacing to a length size of the battery cell is greater than 0 and does not exceed 47.5%. In this way, it is beneficial to forming a flat region having a large area on the first wall along the length direction of the battery cell, so that it is convenient for other components having large outer contour sizes in the battery to be arranged in the region, thereby providing convenience for arranging the other components in the battery.

In some embodiments, the ratio of the first spacing to the length size of the battery cell is greater than 0 and does not exceed 5%; or
the ratio of the first spacing to the length size of the battery cell ranges from 40% to 47.5%.

In this way, it is further beneficial to forming a flat region having a large area on two sides or one side of the protrusion along the length direction of the battery cell, so that other components having large outer contour sizes in the battery can be arranged in the region.

In some embodiments, a spacing between the second central plane of the battery cell along the width direction of the battery cell and the fourth central plane of the protrusion along the width direction of the battery cell is a second spacing, and a ratio of the second spacing to a width size of the battery cell is greater than 0 and does not exceed 25%. In this way, it is convenient for a size of the avoidance slot along the width direction to accommodate a part of the electrode assembly and leave some redundancy, so that the electrode assembly can extend into or exit from the avoidance slot.

In some embodiments, the ratio of the second spacing to the width size of the battery cell is greater than 0 and does not exceed 5%.

In this way, it is more convenient for the size of the avoidance slot along the width direction to accommodate a part of the electrode assembly and leave some redundancy.

In some embodiments, a ratio of a size of the protrusion along the length direction of the battery cell to the length size of the battery cell is not less than 5% and is less than 100%. In this way, it is beneficial to making the space in the avoidance slot meet a requirement for accommodating a part of the electrode assembly. In addition, a case in which an edge of the opening cannot limit a position of the cover plate assembly along the length direction due to an excessively long size of the protrusion along the length direction can be avoided, which helps to stabilize the position of the cover plate assembly during assembly.

In addition/alternatively, a ratio of a size of the protrusion along the width direction of the battery cell to the width size of the battery cell is not less than 30% and is less than 100%. In this way, it is beneficial to making the space in the avoidance slot meet a requirement for accommodating a part of the electrode assembly. In addition, a case in which an edge of the opening cannot limit a position of the cover plate assembly along the width direction due to an excessively long size of the protrusion along the width direction can be avoided, which helps to stabilize the position of the cover plate assembly during assembly.

In some embodiments, a ratio of a height of the protrusion in a total height of the battery cell is not greater than 35%. In this way, it is beneficial to making the space in the avoidance slot satisfy a requirement for accommodating a part of the electrode assembly in the height direction, occurrence of problems in arrangement of other components in the battery due to an excessively large height of the protrusion is reduced, and it is beneficial to reducing a size of the tab.

In some embodiments, the battery cell includes an anti-explosion valve, and the anti-explosion valve is arranged on the housing. In this way, an advantage of a large arrangement space on the housing can be used. This is beneficial to deploying an anti-explosion valve having a large opening flow, thereby further reducing a probability that the battery cell explodes. In addition, it is beneficial to adapting a direction in which a high-temperature air flow is squirted after the anti-explosion valve is opened to an arrangement manner of battery cells in the battery, thereby improving use safety of the battery.

In some embodiments, the anti-explosion valve is located on one side of the housing facing away from the protrusion. In this way, it is beneficial to keeping the high-temperature air flow, after being squirted, away from other components that are in the battery and that are electrically connected to the cover plate assembly, thereby reducing impact of the high-temperature air flow on other battery cells and other components, reducing a probability that a chain reaction occurs during thermal runaway in the battery, and improving the use safety of the battery.

Alternatively, the battery cell is a cubic structure, and the anti-explosion valve is located on a wall surface of the housing adjacent to the first wall. In this way, the high-temperature air flow squirted from the anti-explosion valve is kept away from other components that are in the battery and that are electrically connected to the cover plate assembly, thereby reducing impact of the high-temperature air flow on other battery cells and other components, reducing a probability that a chain reaction occurs during thermal runaway in the battery, and improving the use safety of the battery.

An embodiment of the present disclosure further provides a cover plate assembly, applied to a battery cell, where the cover plate assembly includes a cover plate body, the cover plate body is provided with an avoidance area, and one side of the avoidance area along a thickness direction is recessed to form an avoidance slot, and the other side protrudes out to form a protrusion. In this way, it is beneficial to making a space in the battery cell more compact, to reduce a total volume and an outer contour size of the battery cell.

In some embodiments, there are two avoidance areas, and each of the two avoidance areas is located at one end of the cover plate body along a length direction of the cover plate body. In this way, it is beneficial to forming a large flat region on an outer surface of the cover plate assembly between the two avoidance areas, thereby facilitating deploying other components in the battery by using the region. In this way, an area of a region that is of the outer surface of the cover plate assembly and that is located at the other end of the cover plate body in the length direction is the largest, so that it is convenient for other components having large outer contour sizes in the battery to be arranged in the region, thereby providing convenience for arranging the other components in the battery.

In some embodiments, there is one avoidance area, and the avoidance area is located at one end of the cover plate body along the length direction of the cover plate body. In this way, an area of a region that is of an outer surface of the cover plate assembly and that is located at the other end of the cover plate body in the length direction is the largest, so that it is convenient for other components having large outer contour sizes in the battery to be arranged in the region, thereby providing convenience for arranging the other components in the battery.

In some embodiments, the cover plate assembly includes an anti-explosion valve, and the anti-explosion valve is arranged on the protrusion, so that it is beneficial to improving the space utilization of the space in the avoidance slot, and a structure of the cover plate assembly is more compact; and/or

the anti-explosion valve is located on the cover plate body, and is spaced apart from the protrusion, so that it is beneficial to reducing the volume of the protrusion.

In some embodiments, the cover plate assembly includes a terminal, and the terminal is arranged on the protrusion. In this way, it is beneficial to improving the space utilization inside the avoidance slot.

An embodiment of the present disclosure further provides a battery, and the battery includes a plurality of battery cells according to any one of the foregoing embodiments.

In this way, a quantity of battery cells that can be accommodated in the battery can be effectively increased by using the foregoing battery cell in the foregoing embodiments, thereby improving energy density and space utilization of the battery.

An embodiment of the present disclosure further provides an electrical device, the electrical device includes the battery in the foregoing embodiments, and the battery is used as a power supply of the electrical device.

In this way, by using the battery in the foregoing embodiments, a battery endurance capability of the electrical device can be effectively improved.

### BRIEF DESCRIPTION OF THE DRAWINGS

FIG. 1 is a schematic diagram of an electrical device being a vehicle according to an embodiment of the present disclosure;
FIG. 2 is a schematic diagram of a battery according to an embodiment of the present disclosure;
FIG. 3 is a schematic diagram of a battery cell according to a first embodiment of the present disclosure;
FIG. 4 is a schematic exploded view of a first embodiment of the present disclosure;
FIG. 5 is a schematic partial cross-sectional view of a first embodiment of the present disclosure;
FIG. 6 is a schematic diagram of a battery cell according to a second embodiment of the present disclosure;
FIG. 7 is a schematic partial cross-sectional view of a second embodiment of the present disclosure;
FIG. 8 is a schematic exploded view of a second embodiment of the present disclosure;
FIG. 9 is a schematic diagram of a battery cell according to a third embodiment of the present disclosure;
FIG. 10 is a schematic diagram of a battery cell according to a fourth embodiment of the present disclosure;
FIG. 11 is a schematic diagram of positions of a first central plane, a second central plane, a third central plane, and a fourth central plane according to an embodiment of the present disclosure;
FIG. 12 is a schematic diagram of a relationship between a protrusion and a total height of a battery cell according to an embodiment of the present disclosure;
FIG. 13 is a schematic diagram of a battery cell according to a fifth embodiment of the present disclosure;
FIG. 14 is a schematic diagram of a battery cell according to a sixth embodiment of the present disclosure;
FIG. 15 is a schematic diagram of a battery cell according to a seventh embodiment of the present disclosure; and
FIG. 16 is a schematic diagram of a battery cell according to an eighth embodiment of the present disclosure.

### Descriptions of reference numerals:

Vehicle 1000; battery 100; bottom cover 101; top cover 102; controller 200; motor 300;
battery cell 10; mounting cavity 10a; housing 11; opening 11a; first wall 11b; electrode assembly 12; tab 121; electrode plate 122; cover plate assembly 13; encirclement 14; avoidance area 13a; avoidance slot 13b; cover plate body 131; first central plane 131a; second central plane 131b; protrusion 132; third central plane 132a; fourth central plane 132b; anti-explosion valve 133; terminal 134.

### DETAILED DESCRIPTION

It should be noted that, embodiments of the present disclosure and technical features in the embodiments may be mutually combined in a case that no conflict occurs. Detailed descriptions in a specific implementation should be understood as an explanation of an objective of the present disclosure and should not be regarded as an improper limitation on the present disclosure.

Unless otherwise defined, meanings of all technical and scientific terms used herein are the same as those usually understood by a person skilled in the art to which the present disclosure belongs. The terms used herein are merely intended to describe objectives of the specific embodiments, but are not intended to limit the present disclosure. The terms "include", "have", and any variant thereof in the description, claims and the brief description of the drawings of the present disclosure are intended to cover a non-exclusive inclusion.

In the description according to the embodiments of the present disclosure, the technical terms "first", "second", "third", and the like are only used for distinguishing different objects, and should not be understood as indicating or implying relative importance or implying the number, specific order or primary and secondary relationship of indicated technical features. In the descriptions according to the embodiments of the present disclosure, "a plurality of" means two or more, unless otherwise expressly and specifically defined.

Reference herein to "an embodiment" means that a particular feature, structure, or characteristic described in connection with the embodiment may be included in at least one embodiment of the present disclosure. The term appearing at various positions in the specification does not necessarily refer to a same embodiment, or an independent or alternative embodiment mutually exclusive with another embodiment. A person skilled in the art explicitly or implicitly understands that the embodiments described in the specification may be combined with other embodiments.

The term "and/or" in the descriptions of the embodiments of the present disclosure describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

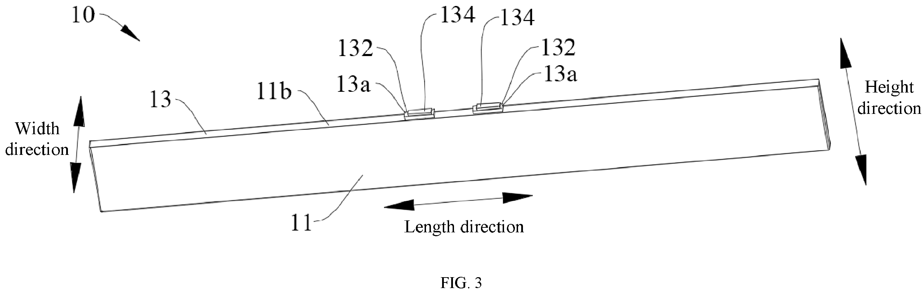

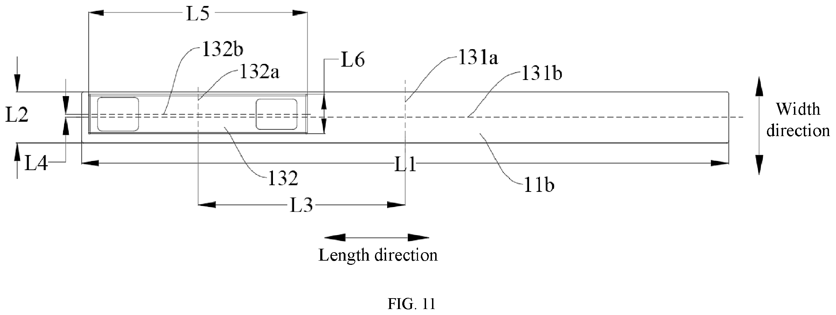

In the descriptions of the embodiments of the present disclosure, orientation or a position relationship of a technical term "length direction" is based on orientation or position relationships shown in FIG. 3, FIG. 9, FIG. 10, and FIG. 11, orientation or a position relationship of a technical term "width direction" is based on orientation or position relationships shown in FIG. 3 and FIG. 11, and orientation or a position relationship of a technical term "height direction" is based on orientation or the position relationship shown in FIG. 3. Such orientation terms are used only for ease and brevity of illustration and descriptions of the embodiments of the present disclosure, rather than indicating or implying that the mentioned device or element needs to have particular orientation or needs to be constructed, operated, or used in particular orientation. Therefore, such terms should not be construed as limitations to the embodiments of the present disclosure.

In the descriptions of the embodiments of the present disclosure, unless otherwise explicitly specified or defined, the technical terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand specific meanings of the terms in the embodiments of the present disclosure based on specific situations.

In the descriptions of the embodiments of the present disclosure, unless otherwise explicitly specified and limited, the technical term "contact" should be understood in a broad sense, which may be direct contact, or may be contact through an intermediate layer, may be contact with no substantial interaction force between the two that are in contact, or may be contact with no interaction force between the two that are in contact.

The embodiments of the present disclosure are described in detail below.

Currently, batteries are more widely applied in life and industry. The batteries are used in energy storage power systems such as water power plants, fire power plants, wind power plants, and solar power plants, and are also widely used in electric mobility devices such as electric bicycles, electric motorcycles, electric vehicles, as well as in aerospace, and other fields. With continuous expansion of application fields of the batteries, market demands for the batteries are also expanding.

An electrode assembly is disposed in the battery cell. A shape of an outer contour of the electrode assembly is irregular. For example, the electrode assembly includes a tab and an electrode plate. The tab is arranged on the electrode plate and protrudes out of an outer surface of the electrode plate, so that a three-dimensional size of an outer contour of the electrode plate cannot represent a three-dimensional size of the outer contour of the electrode assembly. A space for accommodating the electrode assembly in the battery cell has a regular shape, to facilitate manufacturing. Therefore, to accommodate the electrode assembly in the battery cell, a three-dimensional size of the space for accommodating the electrode assembly in the battery cell is significantly greater than the three-dimensional size of the outer contour of the electrode assembly, to form a redundant volume. Consequently, a volume of the battery cell is enlarged, and a quantity of battery cells that can be arranged in a specific space volume range is reduced, causing a problem of low energy density and low space utilization of the battery.

Embodiments of the present disclosure aim to provide a battery cell. A protrusion is disposed on a housing of the battery cell, and a cavity in communication with a space in the housing for accommodating an electrode assembly is formed inside the protrusion, so that a part that protrudes out of the electrode assembly can enter the cavity in the protrusion while a volume of the space in the battery cell is expanded, thereby reducing a three-dimensional size of an outer contour of the housing.

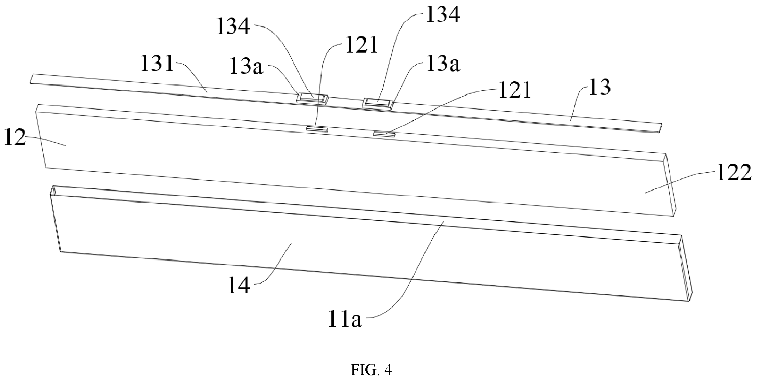

Specifically, an embodiment of the present disclose provides a battery cell 10. Referring to FIG. 3, FIG. 4, and FIG 5, the battery cell 10 includes a housing 11 and an electrode assembly 12.

The housing 11 is provided with a mounting cavity 10a; the electrode assembly 12 is arranged in the mounting cavity 10a; an avoidance area 13a is arranged on a first wall 11b of the housing 11; a side of the avoidance area 13a facing the electrode assembly 12 is recessed to form an avoidance slot 13b, and a side of the avoidance area 13a facing away from the electrode assembly 12 protrudes out to form a protrusion 132; and a part of the electrode assembly 12 extends into the avoidance slot 13b.

The housing 11 provides a mounting space and provides a protective function for the electrode assembly 12. In addition, the mounting cavity 10a of the housing 11 is used for pouring an electrolyte.

A specific material of the housing 11 is not limited, and may be a material such as a steel material, an aluminum material, or a composite metal material.

A positive electrode, a negative electrode, and a separating member are arranged in the electrode assembly 12. During charging and discharging of the battery cell 10, active ions (e.g., lithium ions) in an electrolyte are intercalated and deintercalated between the positive electrode and the negative electrode, and undergo electrochemical reactions. The separating member is arranged between the positive electrode and the negative electrode, and may serve to prevent a short circuit between the positive electrode and the negative electrode while allowing the active ions to pass through.

The first wall 11b is a surface of external surfaces of the housing 11.

An avoidance slot 13b is formed on a side of the avoidance area 13a facing the electrode assembly 12, and a space in the avoidance slot 13b is used for accommodating a part of the electrode assembly 12. A protrusion 132 is formed on a side of the avoidance area 13a facing away from the electrode assembly 12, so that when a size of the first wall 11b is specified, the first wall 11b can be as close to the electrode assembly 12 as possible, and a volume of the avoidance slot 13b is increased, so that a volume of the mounting cavity 10a can be effectively reduced, and the part of the electrode assembly 12 extending into the avoidance slot 13b can be as large as possible.

It may be understood that a protruding direction of the protrusion 132 is the same as a recessing direction of the avoidance slot 13b.

In the battery cell 10 in this embodiment of the present disclosure, the avoidance slot 13b for accommodating a part of the electrode assembly 12 and the protrusion 132 corresponding to the accommodating groove are formed on the first wall 11b, so that when a volume of the mounting cavity 10a satisfies a requirement for accommodating the electrode assembly 12, it is beneficial to reducing a redundant volume in the mounting cavity 10a, and making a space in the battery cell 10 more compact, to reduce a total volume and an outer contour size of the battery cell 10, and it is further beneficial to improving a quantity of battery cells 10 that can be accommodated in the battery, and improving energy density and space utilization of the battery.

The battery cells in the embodiment of the present disclosure are combined in plural to constitute a form of a battery module or a battery.

The battery module may be used in, but is not limited to, an electrical device such as a vehicle, a ship, or an aircraft. A power supply system of the electrical device may be formed by using the battery cell and the battery in the embodiments of the present invention.

The battery may also be used in, but is not limited to, an electrical device such as an energy storage power system, a vehicle, a ship, or an aircraft. Use of the battery can provide higher total energy. In addition, the battery is formed by arranging a plurality of grouped cells in a sealed case, thereby having a more reliable dust-proofing and waterproofing property, and therefore, can be applied to a scenario in which a use environment is harder, wet, or even immersed.

An embodiment of the present disclosure provides an electrical device including the foregoing battery module or battery configured to provide electric energy. The electrical device may be, but is not limited to, a mobile phone, a tablet, a laptop, an electric toy, an electric tool, a battery car, an electric automobile, a ship, a spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description, the following embodiments are described by using an example in which the electrical device according to an embodiment of the present disclosure is a vehicle 1000. Descriptions are provided below with reference to the accompanying drawings.

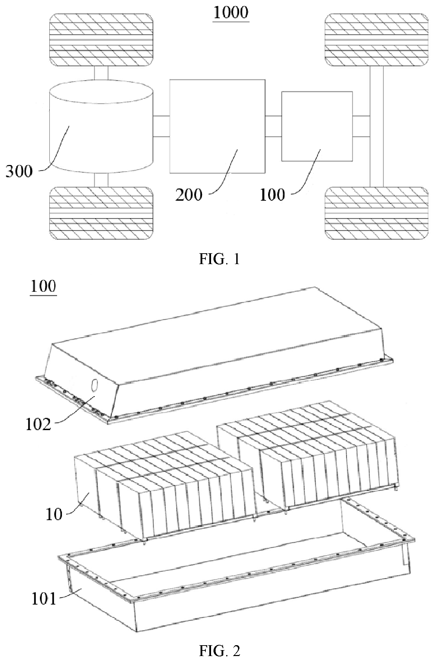

FIG. 1 is a schematic diagram of a structure of a vehicle 1000 according to an embodiment of the present disclosure. The vehicle 1000 may be a fuel powered vehicle, a gas powered vehicle, or a new energy vehicle. The new energy vehicle may be a pure electric vehicle, a hybrid electric vehicle, an extended range vehicle, or the like. As shown in FIG. 1, a battery 100 is arranged inside the vehicle 1000. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of the present disclosure, the battery 100 may serve not only as a power supply for operating the vehicle 1000, but also as a power supply for driving the vehicle 1000, to alternatively or partially replace fuel or natural gas to provide driving power for the vehicle 1000.

FIG. 2 is a schematic three-dimensional exploded view of a battery 100 according to an embodiment of the present disclosure. The battery 100 includes a bottom cover 101, a top cover 102, and at least one battery cell 10. The top cover 102 covers above the bottom cover 101, so that an accommodating space for placing the battery cell 10 is formed between the bottom cover 101 and the top cover 102.

There may be a plurality of battery cells 10 in the battery 100, and the plurality of battery cells 10 may be connected to each other in series, in parallel, or in parallel-series. The parallel-series connection indicates that the plurality of battery cells 10 are connected in both series and parallel. The plurality of battery cells 10 may be directly connected together in series, in parallel, or in parallel-series, and then the whole formed by the plurality of battery cells 10 are placed in the accommodating space formed by the bottom cover 101 and the top cover 102. Certainly, the battery 100 may alternatively be in a form of a battery module formed by the plurality of battery cells 10 that are first connected in series, in parallel, or in parallel-series. The plurality of battery modules are then connected in series, in parallel, or in parallel-series to form a whole and accommodated in the accommodating space formed by the bottom cover 101 and the top cover 102. The battery 100 may also include other structures, for example, the battery 100 may also include a bus component configured to implement electrical connection among the plurality of battery cells 10.

In an embodiment of the present disclosure, the battery cell 10 may be a secondary battery, which is a battery cell 10 of which active materials can be activated by means of charging for reuse after the battery cell 10 is discharged.

The battery cell 10 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

For example, the battery cell 10 may be a cylindrical battery cell, a prismatic battery cell, a soft packet battery cell, or a battery cell in another shape. The prismatic battery cell includes a square-shell battery cell, a blade-shaped battery cell, or a multi-prismatic battery. The multi-prismatic battery is, for example, a hexadecagonal prismatic battery. This is not specifically limited in the embodiments of the present disclosure.

The battery cell 10 in the embodiments of the present disclosure is described in detail below.

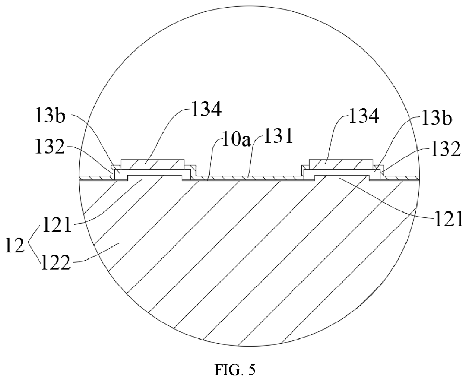

In some embodiments, referring to FIG. 5, the electrode assembly 12 includes a tab 121 and an electrode plate 122, the tab 121 is located at an edge of one end of the electrode plate 122 facing an inner wall of the mounting cavity 10a, and the tab 121 extends into the avoidance slot 13b.

The electrode plate 122 includes a positive electrode plate 122, a negative electrode plate 122, and a separating member. The positive electrode plate 122 may be a lithium ion-containing paste spread on an aluminum foil sheet, and the negative electrode plate 122 may be a paste whose main component is graphite and that is spread on a copper foil sheet. The positive electrode plate 122 and the negative electrode plate 122 are separated by the separating member, and then are formed into a required shape in a winding or laminating manner.

A specific type of the electrode plate 122 is not limited, and may be a wound type or a laminated type.

There are at least two tabs 121, one tab 121 is electrically connected to the positive electrode plate 122, and the other tab 121 is electrically connected to the negative electrode plate 122. The tab 121 is electrically conductive, and is configured to lead out a current generated by the tab 122, to satisfy requirements on charging and discharging of the battery cell 10.

At least a part of the tab 121 extends into the avoidance slot 13b. This helps make a space shape inside the mounting cavity 10a adaptive to an outer contour shape of the electrode plate 122. This is beneficial to reducing a space volume of the mounting cavity 10a, to reduce an overall size of the battery cell 10, and is beneficial to avoiding pressing between an inner wall of the avoidance slot 13b and the electrode plate 122, so that the battery cell 10 can be normally charged and discharged.

It may be understood that, referring to FIG. 5, gaps exist in at least some regions between the inner wall of the avoidance slot 13b and the tab 121.

It may be understood that, gaps exist between the inner wall of the mounting cavity 10a and the electrode plate 122, to avoid pressing between the inner wall of the mounting cavity 10a and the electrode plate 122.

It may be understood that an arrangement manner of the avoidance area 13a is adaptive to the tab 121.

For example, referring to FIG. 3 and FIG. 5, there are two tabs 121, and polarities of the tabs 121 are opposite, there are two avoidance areas 13a, and each of the two tabs 121 is located in the avoidance slot 13b of one of the avoidance areas 13a.

In other words, spaces in which the two tabs 121 are located are separated from each other. In this way, a probability of a short circuit caused by contact between the two tabs 121 is reduced, thereby effectively improving use safety of the battery cell 10.

The two avoidance areas 13a may be symmetrically arranged.

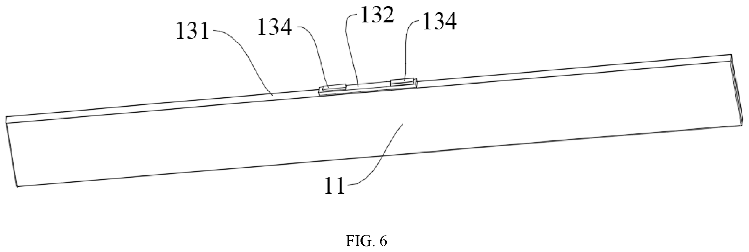

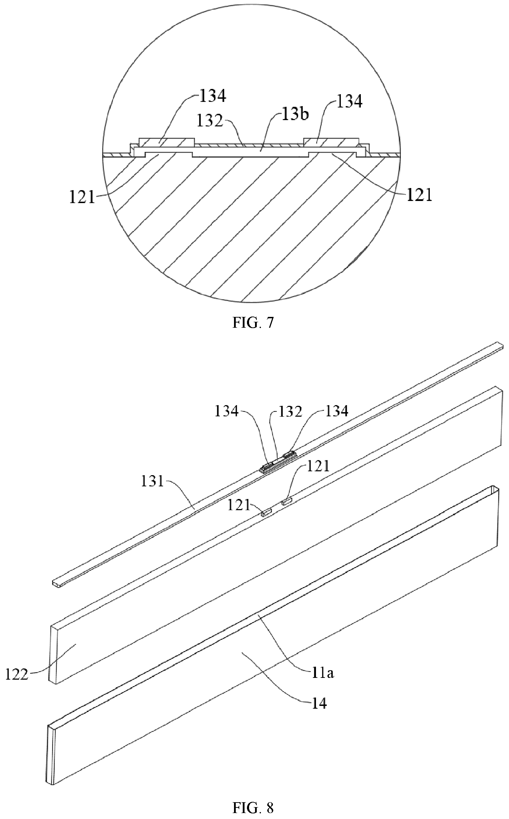

For another example, referring to FIG. 6, FIG. 7, and FIG. 8, there is one avoidance area 13a, and two tabs 121 are located in the avoidance slot 13b of the avoidance area 13a and are spaced apart.

In other words, the two tabs 121 are located in a space of the same avoidance slot 13b. In this way, only the protrusion 132 and the avoidance slot 13b corresponding to one avoidance area 13a need to be manufactured on the first wall 11b, thereby reducing production costs. In addition, during assembly of the battery cell 10, the two tabs 121 can synchronously enter the avoidance slot 13b, thereby simplifying mounting steps.

The two tabs 121 are spaced apart, to reduce a risk of a short circuit caused by contact between the two tabs 121.

It may be understood that, the protrusion 132 protrudes out of an outer surface of the battery cell 10. Therefore, arrangement orientation of the protrusion 132 affects arrangement of components other than the battery cell 10 in the battery.

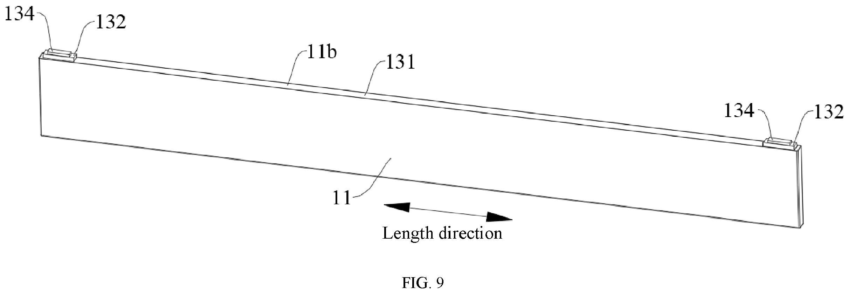

For example, in some embodiments, referring to FIG. 9, there are two avoidance areas 13a, and each of the two avoidance areas 13a is located at one end of the battery cell 10 along a length direction of the battery cell 10.

The length direction of the battery cell 10 refers to a direction in which the largest size in three-dimensional sizes of an outer contour of the battery cell 10 extends when a shape of the outer contour of the battery cell 10 is square.

In this way, a spacing between the two avoidance areas 13a is enlarged as much as possible, which helps the first wall 11b between the two avoidance areas 13a form a large flat region, so that when a volume inside the battery is specified, it is convenient for other components having large outer contour sizes in the battery to be arranged in the region, thereby providing convenience for arranging the other components in the battery. Moreover, it is beneficial to reducing a volume of the battery, thereby improving the space utilization inside the battery, so that the volume of the battery is more compact.

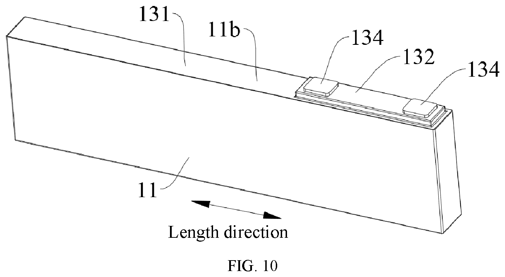

For another example, in some embodiments, referring to FIG. 10, there is one avoidance area 13a, and a distance between the avoidance area 13a and one end of the battery cell 10 in the length direction is greater than a distance between the avoidance area 13a and the other end of the battery cell 10 in the length direction.

In other words, the first wall 11b is divided into two regions by the avoidance area 13a along the length direction, and an area of one region is larger than that of the other region. In this way, when the volume inside the battery is specified, it is convenient for other components having large outer contour sizes in the battery to be arranged in a region having a large area, which provides convenience for arranging the other components in the battery. In addition, it is beneficial to reducing the volume of the battery, and improving the space utilization inside the battery, so that the volume of the battery is more compact.

In some embodiments in which there is one avoidance area 13a, referring to FIG. 10, the avoidance area 13a is located at one end of the battery cell 10 in the length direction. In this way, an area of a region that is of the first wall 11b and that is located at the other end of the battery cell 10 in the length direction is the largest, so that it is convenient for other components having large outer contour sizes in the battery to be arranged in the region, thereby providing convenience for arranging the other components in the battery. Moreover, it is beneficial to reducing the volume of the battery, thereby improving the space utilization of the battery, so that the volume of the battery is more compact.

Specific shapes of the protrusion 132 and the avoidance slot 13b are not limited, and are, for example, round or square.

It may be understood that the shapes of the protrusion 132 and the avoidance slot 13b are the same, and are adaptive to a shape of the tab 121, to improve space utilization in the avoidance slot 13b and reduce a volume of the protrusion 132, thereby reducing an adverse effect of the protrusion 132 on space utilization in the battery.

A specific structural form of the housing 11 is not limited.

For example, referring to FIG. 3 to FIG. 8 and FIG. 13 to FIG. 16, the housing 11 includes an encirclement 14 and a cover plate assembly 13, a side of the encirclement 14 is open to form an opening 11a, the cover plate assembly 13 includes a cover plate body 131 and an anti-explosion valve 133, the cover plate body 131 covers the opening 11a to jointly enclose the mounting cavity 10a, the first wall 11b is located at the cover plate body 131, and the anti-explosion valve 133 is arranged at the cover plate body 131.

The cover plate assembly 13 covers the opening 11a, and is in sealing connection with the encirclement 14, to encapsulate the electrode assembly 12 and an electrolyte in the mounting cavity 10a, to prevent the electrolyte from spilling out, or prevent foreign bodies from entering the mounting cavity 10a to pollute the electrolyte, so that electrochemical reactions in the battery cell 10 can be normally performed during charging and discharging.

A specific manner of the sealing connection between the cover plate assembly 13 and the encirclement 14 of the housing is not limited, for example, may be soldering.

The cover plate body 131 is configured to provide mounting positions for other components in the cover plate assembly 13, and sealing connection is achieved between the cover plate body 131 and the encirclement 14.

After thermal runaway occurs in the battery cell 10, the anti-explosion valve 133 is configured to open triggered by a pressure inside the battery cell 10, so that the gas and/or liquid inside the battery cell 10 is discharged out of the battery cell 10 under the pressure, thereby reducing a probability that the battery cell 10 explodes.

In this way, by arranging the avoidance area 13a on the cover plate assembly 13, it is beneficial to enabling a part of the electrode assembly 12 to directly enter or exit from the avoidance slot 13b in a process of assembling and disassembling the cover plate assembly 13, thereby improving an assembly and disassembly efficiency of the battery cell 10. In addition, it is beneficial to synchronously mounting the anti-explosion valve 133 with the assembly of the cover plate assembly 13, thereby improving the assembly efficiency of the battery cell 10.

It may be understood that an opening direction of the avoidance slot 13b is the same as a covering direction of the cover plate assembly 13.

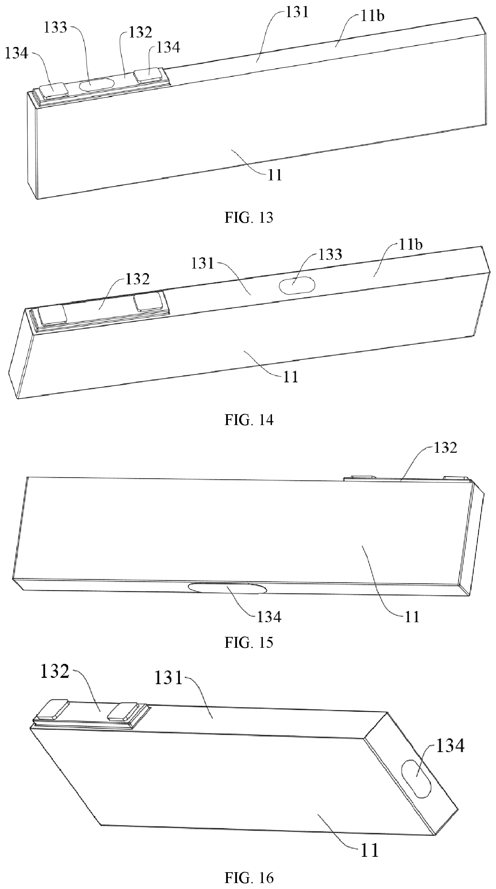

In some embodiments, referring to FIG. 13, the anti-explosion valve 133 is arranged on the protrusion 132, and the protrusion 132 is located at one end of the cover plate body 131 along the length direction of the battery cell 10.

In this way, it is beneficial to improving space utilization of a space in the avoidance slot 13b, reducing the redundant volume in the mounting cavity 10a, and making the space in the battery cell 10 more compact, to reduce the total volume and the outer contour size of the battery cell 10, and it is further beneficial to improving the quantity of battery cells 10 that can be accommodated in the battery, and improving the energy density and the space utilization of the battery. In addition, an area of a region that is of an outer surface of the cover plate body 131 and that is located at the other end of the battery cell 10 in the length direction is larger, so that it is convenient for other components having large outer contour sizes in the battery to be arranged in the region, thereby providing convenience for arranging the other components in the battery.

In some embodiments, referring to FIG. 14, the anti-explosion valve 133 is located on the cover plate body 131, and the anti-explosion valve 133 and the protrusion 132 are respectively located at one end of the cover plate body 131 along the length direction of the battery cell 10. The anti-explosion valve 133 is arranged on a part other than the avoidance area 13a on the cover plate body 131.

In this way, it is beneficial to reducing a volume of the protrusion 132.

In some embodiments, the electrode assembly 12 includes a tab 121 and an electrode plate 122, the tab 121 is arranged at an edge of one end of the electrode plate 122 facing the cover plate body 131, and the tab 121 is located at one end of the electrode plate 122 along the length direction of the battery cell 10, so that the tab 121 extends into the avoidance slot 13b.

In this way, arrangement of the tab 121 adapts to arrangement of the protrusion 132, thereby facilitating improving space utilization inside the mounting cavity 10a.

A specific method for manufacturing the protrusion 132 is not limited. For example, the cover plate body 131 is a metal plate body, and the protrusion 132 is formed through stamping.

It may be understood that a mounting hole passing through the mounting cavity 10a and the outside is disposed on the cover plate assembly 13, and the anti-explosion valve 133 is arranged in the mounting hole and is sealed with an inner wall of the mounting hole.

In some embodiments, referring to FIG. 3 to FIG. 10, the cover plate assembly 13 includes a terminal 134, and the terminal 134 is arranged on the protrusion 132 and is electrically connected to the electrode assembly 12.

The terminal 134 is a part that is in the cover plate assembly 13 and that is configured to be electrically connected to the tab 121 of the electrode assembly 12. There are at least two terminals 134, and the terminals 134 are divided into two parts with opposite polarities. One part is configured to be electrically connected to a part of the electrode assembly 12 having a positive polarity, to serve as a positive electrode of the battery cell 10. The other part is configured to be electrically connected to a part of the electrode assembly 12 having a negative polarity, to serve as a negative electrode of the battery cell 10.

It may be understood that a penetrating through-hole is provided on the protrusion 132, and the terminal 134 penetrates the through-hole to be electrically connected to the electrode assembly 12. Therefore, a part of the terminal 134 is located in the avoidance slot 13b.

In this way, the space utilization inside the avoidance slot 13b is further improved, thereby reducing the redundant volume in the mounting cavity 10a, and making the space in the battery cell 10 more compact, to reduce the total volume and the outer contour size of the battery cell 10, and it is further beneficial to improving the quantity of battery cells 10 that can be accommodated in the battery, and improving the energy density and the space utilization of the battery.

In some embodiments, referring to FIG. 13, the terminal 134 and the anti-explosion valve 133 are located on a same protrusion 132, and are located between two terminals 134. In this way, a space between the two terminals 134 is effectively used, and the space utilization in the avoidance slot 13b is further improved, so that a structure of the battery cell 10 is more compact.

It may be understood that a specific position of the protrusion 132 on the first wall 11b is not limited.

In some embodiments, a first central plane 131a of the battery cell 10 along a length direction of the battery cell 10 coincides with a third central plane 132a of the protrusion 132 along the length direction of the battery cell 10.

The first central plane 131a refers to a reference plane that is perpendicular to the length direction of the battery cell 10 and that is located at a position in the middle of the battery cell 10 along the length direction of the battery cell 10.

The third central plane 132a refers to a reference plane that is perpendicular to the length direction of the battery cell 10 and that is located at a position in the middle of the protrusion 132 along a length direction of the protrusion 132.

In this way, it is beneficial to making a structure of the battery cell 10 symmetrical about the first central plane 131a, and facilitates adjusting placement directions when arranging a plurality of battery cells 10 in the battery module, to improve mounting fitness of the battery cell 10.

In some embodiments, referring to FIG. 11, a spacing between the first central plane 131a of the battery cell 10 along the length direction of the battery cell 10 and the third central plane 132a of the protrusion 132 along the length direction of the battery cell 10 is a first spacing, and a ratio of the first spacing to a length size of the battery cell 10 is greater than 0 and does not exceed 47.5%.

The length size of the battery cell 10 is a size value of L1 in FIG. 11; and the first spacing is a size value of L3 in FIG. 11. In other words, 0 < L3/L1 ≤ 47.5%.

In this way, it is beneficial to forming a flat region having a large area on the first wall 11b along the length direction of the battery cell 10, so that other components having large outer contour sizes in the battery can be arranged in the region, thereby providing convenience for arranging the other components in the battery.

A specific value of a ratio of the first spacing to the length size of the battery cell 10 is not limited, for example, may be 0.5%, 6%, 10%, 15%, 20%, 25%, 30%, or 47.5%.

A specific manner of measuring the length size of the battery cell 10 is not limited. For example, a size between end faces of two ends of the battery cell 10 along the length direction is measured by using a vernier caliper or a ruler.

A specific manner of measuring the length size of the protrusion 132 is not limited. For example, a size between end faces of two ends of the protrusion 132 along the length direction is measured by using a vernier caliper or a ruler.

A specific manner of measuring the first spacing is not limited. For example, a size between two ends of the battery cell 10 along the length direction and a size between two ends of the protrusion 132 along the length direction are separately measured by using a vernier caliper or a ruler, positions of the first central plane 131a and the second central plane 131b are calculated, and the first central plane 131a and the second central plane 131b are separately marked. The battery cell 10 is placed on a projector, and projection images of the two marked positions are aligned with a scale of the projector, to obtain the size of the first spacing.

In some embodiments, the ratio of the first spacing to the length size of the battery cell 10 is greater than 0 and does not exceed 5%; or
the ratio of the first spacing to the length size of the battery cell 10 ranges from 40% to 47.5%.

In this way, it is further beneficial to forming a flat region having a large area on two sides or one side of the protrusion 132 along the length direction of the battery cell 10, so that other components having large outer contour sizes in the battery can be arranged in the region.

A specific value of the ratio of the first spacing to the length size of the battery cell 10 is not limited, for example, may be 1%, 2%, 3%, 4%, or 5%; and for another example, may be 40%, 42.5%, 45%, or 47.5%.

In some embodiments, a second central plane 131b of the battery cell 10 along a width direction of the battery cell 10 coincides with a fourth central plane 132b of the protrusion 132 along the width direction of the battery cell.

The length direction of the battery cell 10 refers to a direction that is in the three-dimensional sizes of the outer contour of the battery cell 10 and that is perpendicular to the length direction of the battery cell 10 on a plane of the first wall 11b when a shape of the outer contour of the battery cell 10 is square.

The second central plane 131b refers to a reference plane that is perpendicular to the width direction of the battery cell 10 and that is located at a position in the middle of the battery cell 10 along the width direction of the battery cell 10.

The fourth central plane 132b refers to a reference plane that is perpendicular to the width direction of the battery cell 10 and that is located at a position in the middle of the protrusion 132 along a width direction of the protrusion 132.

In this way, it is further beneficial to forming a flat region having a large area on the first wall 11b along the width direction of the battery cell 10, so that other components having large outer contour sizes in the battery can be arranged in the region.

In some embodiments, referring to FIG. 11, a spacing between the second central plane 131b of the battery cell 10 along the width direction of the battery cell 10 and the fourth central plane 132b of the protrusion 132 along the width direction of the battery cell 10 is a second spacing, and a ratio of the second spacing to a width size of the battery cell 10 is greater than 0 and does not exceed 25%.

The width size of the battery cell 10 is a size value of L2 in FIG. 11; and the second spacing is a size value of L4 in FIG. 11. In other words, 0 < L4/L2 ≤ 25%.

In this way, it is convenient for the size of the avoidance slot 13b along the width direction to accommodate a part of the electrode assembly 12 and leave some a certain redundancy, so that the electrode assembly 12 can extends into or exit from the avoidance slot 13b.

A specific value of the ratio of the second spacing to the width size of the battery cell 10 is not limited, for example, may be 0.5%, 10%, 15%, 20%, or 25%.

A specific manner of measuring the width size of the battery cell 10 is not limited. For example, a size between end faces of two ends of the battery cell 10 along the width direction is measured by using a vernier caliper or a ruler.

A specific manner of measuring the width size of the protrusion 132 is not limited. For example, a size between end faces of two ends of the protrusion 132 along the width direction is measured by using a vernier caliper or a ruler.

A specific manner of measuring the second spacing is not limited. For example, a size between two ends of the battery cell 10 along the width direction and a size between two ends of the protrusion 132 along the width direction are separately measured by using a vernier caliper or a ruler, positions of the third central plane 132a and the fourth central plane 132b are calculated, and the third central plane 132a and the fourth central plane 132b are separately marked. The battery cell 10 is placed on a projector, and projection images of the two marked positions are aligned with a scale of the projector, to obtain the size of the second spacing.

In some embodiments, a range of the ratio of the second spacing to the width size of the battery cell 10 is greater than 0 and not exceeding 5%. In other words, 0 < L4/L2 ≤ 5%.

In this way, it is more convenient for the size of the avoidance slot 13b along the width direction to accommodate a part of the electrode assembly 12 and leave some redundancy.

A specific value of the ratio of the second spacing to the width size of the battery cell 10 is not limited, for example, may be 1%, 2%, 3%, 4%, or 5%.

In some embodiments, referring to FIG. 11, a ratio of a size of the protrusion 132 along the length direction of the battery cell 10 to the length size of the battery cell 10 is not less than 5% and is less than 100%. In other words, 5% ≤ L5/L1 < 100%.

In this way, it is convenient for a space inside the avoidance slot 13b to satisfy a requirement for accommodating a part of the electrode assembly 12.

A specific value of the ratio of the size of the protrusion 132 along the length direction of the battery cell 10 to the length size of the battery cell 10 is not limited, for example, may be 5%, 10%, 25%, 50%, 75%, or 99.9%.

In some embodiments, the ratio of the size of the protrusion 132 along the length direction of the battery cell 10 to the length size of the battery cell 10 ranges from 5% to 37.5%.

In this way, it is more convenient for a space inside the avoidance slot 13b to satisfy a requirement for accommodating the electrode assembly 12.

A specific value of the ratio of the size of the protrusion 132 along the length direction of the battery cell 10 to the length size of the battery cell 10 is not limited, for example, may be 5%, 10%, 15%, 20%, 25%, 30%, 35%, or 37.5%.

In some embodiments, referring to FIG. 11, a ratio of a size of the protrusion 132 along the width direction of the battery cell 10 to the width size of the battery cell 10 is not less than 30% and is less than 100%. In other words, 30% ≤ L6/L2 < 100%.

In this way, it is convenient for a space inside the avoidance slot 13b to satisfy a requirement for accommodating a part of the electrode assembly 12.

A specific value of the ratio of the size of the protrusion 132 along the width direction of the battery cell 10 to the width size of the battery cell 10 is not limited, for example, may be 30%, 35%, 65%, 75%, 80%, 90%, or 99.9%.

In some embodiments, the ratio of the size of the protrusion 132 along the width direction of the battery cell 10 to the width size of the battery cell 10 ranges from 40% to 70%.

In this way, it is more convenient for a space inside the avoidance slot 13b to satisfy a requirement for accommodating the electrode assembly 12.

A specific value of the ratio of the size of the protrusion 132 along the width direction of the battery cell 10 to the width size of the battery cell 10 is not limited, for example, may be 40%, 50%, 60%, or 70%.

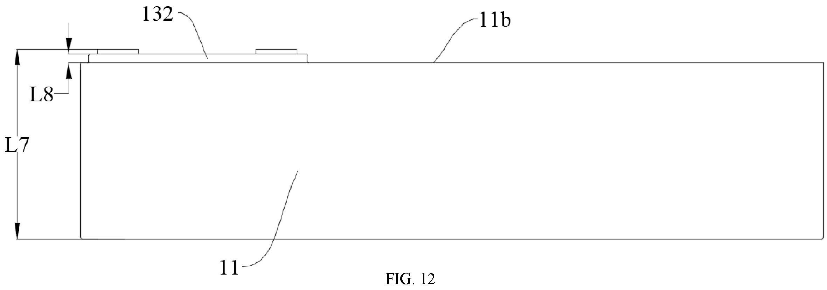

In some embodiments, referring to FIG. 12, a ratio of a height of the protrusion 132 to a total height of the battery cell 10 is not greater than 35%. In other words, L8/L7 ≤ 35%.

The height of the protrusion 132 refers to a size of the protrusion 132 along the height direction of the battery cell 10.

The height direction of the battery cell 10 refers to a direction in which the protrusion 132 protrudes out of the first wall 11b in three-dimensional sizes of an outer contour of the battery cell 10 when a shape of the outer contour of the battery cell 10 is square.

In this way, it is beneficial to making the space in the avoidance slot 13b satisfy a requirement for accommodating a part of the electrode assembly 12 in the height direction, occurrence of problems in arrangement of other components in the battery due to an excessively large height of the protrusion 132 is reduced, and it is beneficial to reducing a size of the tab 121.

A specific manner of measuring the height of the battery cell 10 is not limited. For example, a size between end faces of two ends of the battery cell 10 along the height direction is measured by using a vernier caliper or a ruler.

A specific manner of measuring the height of the protrusion 132 is not limited. For example, a size between end faces of two ends of the protrusion 132 along the height direction is measured by using a vernier caliper or a ruler.

A specific value of the ratio of the height of the protrusion 132 to the total height of the battery cell 10 is not limited, for example, may be 5%, 10%, 15%, 20%, 25%, 30%, or 35%.

In some embodiments, referring to FIG. 11, the ratio of the height of the protrusion 132 to the total height of the battery cell 10 ranges from 2.5% to 20%. In other words, 2.5% ≤ L8/L7 ≤ 20%.

In this way, occurrence of problems in arrangement of other components in the battery due to an excessively large height of the protrusion 132 is further reduced.

In some embodiments, referring to FIG. 15 and FIG. 16, the battery cell 10 includes an anti-explosion valve 133, and the anti-explosion valve 133 is arranged on the housing 11.

In other words, a mounting hole penetrating a thickness direction of the housing 11 is disposed on the housing 11, and the anti-explosion valve 133 is arranged in the mounting hole and is sealed with an inner wall of the mounting hole.

In this way, an advantage of a large arrangement space on the housing 11 can be used. This is beneficial to deploying an anti-explosion valve 133 having a large opening flow, thereby further reducing a probability that the battery cell 10 explodes. In addition, it is beneficial to adapting a direction in which a high-temperature air flow is squirted after the anti-explosion valve 133 is opened to an arrangement manner of battery cells 10 in the battery, thereby improving use safety of the battery.

A specific position of the anti-explosion valve 133 on the housing 11 is not limited.

For example, referring to FIG. 15, the anti-explosion valve 133 is located on a side of the housing 11 facing away from the protrusion 132. In other words, an injection direction of the high-temperature air flow squirted from the anti-explosion valve 133 is a direction away from the protrusion. In this way, it is beneficial to keeping the high-temperature air flow, after being squirted, away from other components that are in the battery and that are electrically connected to the protrusion 132, thereby reducing impact of the high-temperature air flow on other battery cells 10 and other components, reducing a probability that a chain reaction occurs during thermal runaway in the battery, and improving the use safety of the battery.

For another example, referring to FIG. 16, the battery cell 10 is a cubic structure, and the anti-explosion valve 133 is located on a wall surface of the housing 11 adjacent to the first wall 11b.

In this way, the high-temperature air flow squirted from the anti-explosion valve 133 is kept away from other components that are in the battery and that are electrically connected to the protrusion 132, thereby reducing impact of the high-temperature air flow on other battery cells 10 and other components, reducing a probability that a chain reaction occurs during thermal runaway in the battery, and improving the use safety of the battery.

Brief descriptions of eight examples are provided below with reference to the accompanying drawings.

### Example 1

Referring to FIG. 3 to FIG. 5, an outer contour shape of the battery cell 10 is square, there are two avoidance areas 13a, each of the two tabs 121 is located in an avoidance slot 13b of one avoidance area 13a, and each of the two terminals 134 is located on one protrusion 132.

### Example 2

Referring to FIG. 6 to FIG. 8, an outer contour shape of the battery cell 10 is square, there is one avoidance area 13a, the two tabs 121 are located in an avoidance slot 13b of the avoidance area 13a and are spaced apart, the two terminals 134 are located on a protrusion 132 corresponding to the avoidance area 13a, and the first central plane 131a of the battery cell 10 along the length direction of the battery cell 10 coincides with the third central plane 132a of the protrusion 132 along the length direction of the battery cell 10.

### Example 3

Referring to FIG. 9, an outer contour shape of the battery cell 10 is square, there are two avoidance areas 13a, each of the two avoidance areas 13a is located at one end of the battery cell 10 along the length direction of the battery cell 10, each of the two tabs 121 is located in an avoidance slot 13b of one avoidance area 13a, and each of the two terminals 134 is located on one protrusion 132.

### Example 4

Referring to FIG. 10, an outer contour shape of the battery cell 10 is square, there is one avoidance area 13a, the avoidance area 13a is located at one end of the battery cell 10 along the length direction of the battery cell 10, and the two terminals 134 are located on a protrusion 132 corresponding to the avoidance area 13a.

### Example 5

Referring to FIG. 13, there is one avoidance area 13a, the anti-explosion valve 133 and two terminals 134 are located on the protrusion 132, and the anti-explosion valve 133 is located between the two terminals 134.

### Example 6

Referring to FIG. 14, there is one avoidance area 13a, the terminal 134 is located on the protrusion 132, and the anti-explosion valve 133 is located on the cover plate body 131 and is spaced apart from the protrusion 132.

### Example 7

Referring to FIG. 15, there is one avoidance area 13a, and the anti-explosion valve 133 is located on a side of the housing 11 facing away from the cover plate assembly 13.

### Example 8

Referring to FIG. 16, there is one avoidance area 13a, the battery cell 10 is a cubic structure, and the anti-explosion valve 133 is located on a wall surface adjacent to the first wall 11b of the housing 11.

A size of the battery cell 10 along a length direction ranges from 400 millimeters (mm) to 1500 mm, and a specific value thereof is not limited, for example, may be 400 mm, 500 mm, 600 mm, 700 mm, 800 mm, 900, 1000 mm, 1200 mm, or 1500 mm.

A size of the battery cell 10 along a width direction ranges from 10 mm to 60 mm, and a specific value thereof is not limited, for example, may be 10 mm, 20 mm, 30 mm, 35 mm, 40 mm, 50 mm, or 60 mm.

A size of the battery cell 10 along a height direction ranges from 50 mm to 250 mm, and a specific value thereof is not limited, for example, may be 50 mm, 60 mm, 70 mm, 80 mm, 100 mm, 120 mm, 150 mm, 180 mm, 200 mm, 220 mm, or 250 mm.

A size of the protrusion 132 along the height direction ranges from 5 mm to 10 mm, and a specific value thereof is not limited, for example, may be 5 mm, 6 mm, 7 mm, 8 mm, 9 mm, or 10 mm.

An embodiment of the present disclosure further provides a cover plate assembly 13, applied to a battery cell 10. Referring to FIG. 3 to FIG. 8, the cover plate assembly 13 includes a cover plate body 131, the cover plate body 131 is provided with an avoidance area 13a, and one side of the avoidance area 13a along a thickness direction is recessed to form an avoidance slot 13b, and the other side protrudes out to form a protrusion 132.

A space in the avoidance slot 13b is used for accommodating at least a part of a component in the battery cell 10, for example, a part of an electrode assembly 12, to make a space in the battery cell 10 more compact, thereby reducing a total volume and an outer contour size of the battery cell 10.

In some embodiments, referring to FIG. 9, there are two avoidance areas 13a, and each of the two avoidance areas 13a is located at one end of the cover plate body 131 along a length direction of the cover plate body 131.

In this way, it is beneficial to forming a large flat region on an outer surface of the cover plate assembly 13 between the two avoidance areas 13a, thereby facilitating deploying other components in the battery by using the region.

In some embodiments, the length direction of the cover plate body 131 is the length direction of the battery cell 10.

In some embodiments, referring to FIG. 10, there is one avoidance area 13a, and the avoidance area 13a is located at one end of the cover plate body 131 along the length direction of the cover plate body 131.

In this way, an area of a region that is of an outer surface of the cover plate assembly 13 and that is located at the other end of the cover plate body 131 in the length direction is the largest, so that it is convenient for other components having large outer contour sizes in the battery to be arranged in the region, thereby providing convenience for arranging the other components in the battery.

In some embodiments, referring to FIG. 13, the cover plate assembly 13 includes an anti-explosion valve 133, and the anti-explosion valve 133 is arranged on the protrusion 132. In this way, it is beneficial to improving the space utilization of the space in the avoidance slot 13b, and a structure of the cover plate assembly 13 is more compact.

In some embodiments, referring to FIG. 14, the anti-explosion valve 133 is located on the cover plate body 131, and is spaced apart from the protrusion 132. In this way, it is beneficial to reducing a volume of the protrusion 132.

In some embodiments, referring to FIG. 3, the cover plate assembly 13 includes a terminal 134, and the terminal 134 is arranged on the protrusion 132. In this way, it is beneficial to improving the space utilization inside the avoidance slot 13b.

An embodiment of the present disclosure further provides a battery, and the battery includes a plurality of battery cells 10 according to any one of the foregoing embodiments.

In this way, a quantity of battery cells 10 that can be accommodated in the battery can be effectively increased by using the foregoing battery cell 10 in the foregoing embodiments, thereby improving energy density and space utilization of the battery.

An embodiment of the present disclosure further provides an electrical device, the electrical device includes the battery in the foregoing embodiments, and the battery is used as a power supply of the electrical device.

In this way, by using the battery in the foregoing embodiments, a battery endurance capability of the electrical device can be effectively improved.

The various embodiments/implementations of the present disclosure can be combined with each other provided that no contradiction occurs.

The above descriptions are merely some embodiments of the present disclosure and are not intended to limit the present disclosure. For a person skilled in the art, various modifications and changes may be made to the present disclosure. Any modification, equivalent replacement, or improvement made within the spirit and principle of the present disclosure shall fall within the protection scope of the present disclosure.

### Industrial applicability

In the battery cell in this embodiment of the present disclosure, the avoidance slot for accommodating a part of the electrode assembly and the protrusion corresponding to the accommodating groove are formed on the housing, so that when a volume of the mounting cavity satisfies a requirement for accommodating the electrode assembly, it is beneficial to reducing a redundant volume in the mounting cavity, and making a space in the battery cell more compact, to reduce a total volume and an outer contour size of the battery cell, and it is further beneficial to improving a quantity of battery cells that can be accommodated in the battery, and improving energy density and space utilization of the battery.

## Claims

1. A battery cell, wherein the battery cell comprises:
a housing, provided with a mounting cavity; and
an electrode assembly, arranged in the mounting cavity; wherein
an avoidance area is provided on a first wall of the housing, a side of the avoidance area facing the electrode assembly is recessed to form an avoidance slot, and a side of the avoidance area facing away from the electrode assembly protrudes out to form a protrusion, and a part of the electrode assembly extends into the avoidance slot.

2. The battery cell according to claim 1, wherein the electrode assembly comprises a tab and an electrode plate, the tab is located at an edge of one end of the electrode plate facing an inner wall of the mounting cavity, and the tab extends into the avoidance slot.

3. The battery cell according to claim 2, wherein there are two tabs, and polarities of the tabs are opposite, there are two avoidance areas, and each of the two tabs is located in the avoidance slot of one of the avoidance areas; or
there is one avoidance area, and the two tabs are located in the avoidance slot of the avoidance area and are spaced apart.

4. The battery cell according to any one of claims 1 to 3, wherein there are two avoidance areas, and each of the two avoidance areas is located at one end of the battery cell along a length direction of the battery cell.

5. The battery cell according to any one of claims 1 to 4, wherein there is one avoidance area, and a distance between the avoidance area and one end of the battery cell along the length direction is greater than a distance between the avoidance area and the other end of the battery cell in the length direction.

6. The battery cell according to claim 5, wherein the avoidance area is located at one end of the battery cell along the length direction of the battery cell.

7. The battery cell according to claim 5 or 6, wherein the housing comprises an encirclement and a cover plate assembly, a side of the encirclement is open to form an opening, the cover plate assembly comprises a cover plate body and an anti-explosion valve, the cover plate body covers the opening to jointly enclose the mounting cavity, the first wall is located at the cover plate body, and the anti-explosion valve is arranged at the cover plate body.

8. The battery cell according to claim 7, wherein the anti-explosion valve is arranged on the protrusion, and the protrusion is located at one end of the cover plate body along the length direction of the battery cell.

9. The battery cell according to claim 7 or 8, wherein the anti-explosion valve is located on the cover plate body, and the anti-explosion valve and the protrusion are respectively located at one end of the cover plate body along the length direction of the battery cell.

10. The battery cell according to claim 8 or 9, wherein the electrode assembly comprises a tab and an electrode plate, the tab is arranged at an edge of one end of the electrode plate facing the cover plate body, and the tab is located at one end of the electrode plate along the length direction of the battery cell, so that the tab extends into the avoidance slot.

11. The battery cell according to any one of claims 7 to 10, wherein the cover plate assembly comprises a terminal, and the terminal is arranged on the protrusion and is electrically connected to the electrode assembly.

12. The battery cell according to claim 1, wherein a first central plane of the battery cell along a length direction of the battery cell coincides with a third central plane of the protrusion along the length direction of the battery cell.

13. The battery cell according to any one of claims 1 to 12, wherein a spacing between the first central plane of the battery cell along the length direction of the battery cell and the third central plane of the protrusion along the length direction of the battery cell is a first spacing, and a ratio of the first spacing to a length size of the battery cell is greater than 0 and does not exceed 47.5%.

14. The battery cell according to claim 13, wherein the ratio of the first spacing to the length size of the battery cell is greater than 0 and does not exceed 5%; or
the ratio of the first spacing to the length size of the battery cell ranges from 40% to 47.5%.

15. The battery cell according to any one of claims 1 to 14, wherein a second central plane of the battery cell along a width direction of the battery cell coincides with a fourth central plane of the protrusion along the width direction of the battery cell.

16. The battery cell according to claim 1, wherein a spacing between the second central plane of the battery cell along the width direction of the battery cell and the fourth central plane of the protrusion along the width direction of the battery cell is a second spacing, and a ratio of the second spacing to a width size of the battery cell is greater than 0 and does not exceed 25%.

17. The battery cell according to claim 16, wherein the ratio of the second spacing to the width size of the battery cell is greater than 0 and does not exceed 5%.

18. The battery cell according to any one of claims 1 to 17, wherein a ratio of a size of the protrusion along the length direction of the battery cell to the length size of the battery cell is not less than 5% and is less than 100%; and/or
a ratio of a size of the protrusion along the width direction of the battery cell to the width size of the battery cell is not less than 30% and is less than 100%.

19. The battery cell according to any one of claims 1 to 18, wherein a ratio of a height of the protrusion in a total height of the battery cell is not greater than 35%.

20. The battery cell according to any one of claims 1 to 20, wherein the battery cell comprises an anti-explosion valve, and the anti-explosion valve is arranged on the housing.

21. The battery cell according to claim 20, wherein the anti-explosion valve is located on one side of the housing facing away from the protrusion; or
the battery cell is a cubic structure, and the anti-explosion valve is located on a wall surface of the housing adjacent to the first wall.

22. A cover plate assembly, applied to a battery cell, wherein the cover plate assembly comprises a cover plate body, the cover plate body is provided with an avoidance area, and one side of the avoidance area along a thickness direction is recessed to form an avoidance slot, and the other side protrudes out to form a protrusion.

23. The cover plate assembly according to claim 22, wherein there are two avoidance areas, and each of the two avoidance areas is located at one end of the cover plate body along a length direction of the cover plate body.

24. The cover plate assembly according to claim 22 or 23, wherein there is one avoidance area, and the avoidance area is located at one end of the cover plate body along the length direction of the cover plate body.

25. The cover plate assembly according to any one of claims 22 to 24, wherein the cover plate assembly comprises an anti-explosion valve, and the anti-explosion valve is arranged on the protrusion; and/or
the anti-explosion valve is located on the cover plate body, and is spaced apart from the protrusion.

26. The cover plate assembly according to any one of claims 22 to 25, wherein the cover plate assembly comprises a terminal, and the terminal is arranged on the protrusion.

27. A battery, wherein the battery comprises the battery cell according to any one of claims 1 to 21.

28. An electrical device, wherein the electrical device comprises the battery according to claim 27, and the battery is used as a power supply of the electrical device.
